# EUROPEAN PATENT APPLICATION

(11) **EP 3 206 126 A1**
(43) Date of publication of application: **16.08.2017**
(21) Application number: 17153180.9
(22) Date of filing: 26.01.2017
(51) Int. Cl.: G06F 11/00, G05B 23/02

(54) **TOP-EVENT ASSESSMENT APPARATUS**

(30) Priority: 12.02.2016 JP 2016024551
(71) Applicant: Mitsubishi Aircraft Corporation, Aichi 455-8555 (JP)
(72) Inventor: ITO, Shingo, Tokyo, 1088215 (JP); SATO, Keiya, Aichi, 4558555 (JP)
(74) Representative: Henkel, Breuer & Partner

(57) **Abstract**

Provided is a top-event assessment apparatus that determines occurrence probabilities of basic events based on statuses as to the basic events and calculates an occurrence probability of a top event or the like. The top-event assessment apparatus includes: a minimal-cut-set management table (5b) in which to store minimal cut sets; a coefficient management table (5c) in which to store coefficients for each of the basic events, the coefficients corresponding to the statuses as to the basic event; a status management table (5d) in which to store the status of each of assessment targets (A, B, and C) as to each of the basic events; a processor (3) that calculates occurrence probabilities for the respective assessment targets or the occurrence probability of the top event based on information in the minimal-cut-set management table (5b), the coefficient management table (5c), and the status management table (5c); and an assessment result management table (5e) in which to store the occurrence probabilities for the respective assessment targets (A, B, and C) or the occurrence probability of the top event calculated by the processor (3).

## Description

### [Technical Field]

The present invention relates to a top-event assessment apparatus with a basic-event status identification function. More particularly, the present invention relates to a safety assessment apparatus using fault tree analysis (FTA), the apparatus being configured to assess safety of an analysis target by determining the occurrence probabilities of basic events in FTA based on statuses as to the basic events and thereby calculating the occurrence probability of a top event or the like.

### [Background Art]

Patent Literature 1 performs safety assessment by calculating the occurrence probability of a top event based on the occurrence probabilities of basic events, identifying minimal cut sets (minimal combinations of basic events that could cause the top event), and assessing each of the minimal cut sets.

Specifically, in Patent Literature 1, a fault tree is created for a top event that could be caused by multiple events that are possible in a largescale plant such as a nuclear power plant, and similarly, an event tree is created for an initiating event that is possible in the plant. The fault tree is linked with another fault tree, and the event tree and the fault tree thus created are linked together. Then, the occurrence probability of the top event of the fault tree is analyzed, and the occurrence frequency of the end state of a scenario which is a combination of intermediate events of the event tree is analyzed.

For example, the occurrence probability of each basic event is calculated using records of occurrence of the basic event obtained based on actual performance of the assessment target, or using a failure-effect validation system described in Patent Literature 2. The failure-effect validation system includes a system modeler, an effects modeler, a model analysis system, and/or an effects assessment system. To develop a cumulative effects model for failure modes of a complex system, the effects modeler includes a hazards (loss or degradation of functions) modeler, a crew-workload modeler, a safety-margins modeler, and a physiological-effects modeler.

### [Citation List]

### [Patent Literatures]

[Patent Literature 1] Japanese Patent Application Publication No. 2002-24337
[Patent Literature 2] Japanese Patent Application Publication No. 2015-18543

### [Summary of Invention]

### [Technical Problem]

Conformity certification regarding fire protection in civil aircraft includes the following requirement (excerpted from FAA's Federal Aviation Regulations §25.863(a) Flammable fluid fire protection):

"In each area where flammable fluids or vapors might escape by leakage of a fluid system, there must be means to minimize the probability of ignition of the fluids and vapors, and the resultant hazards if ignition does occur."

This requirement corresponds to Airworthiness Inspection Manual 4-10-6-1 in Japan and CS 25.863(a) in Europe.

To show the conformity with this requirement, failures contributable to uncontrollable fire need to be identified for components installed in an aircraft, and the reliabilities of countermeasures against those failures need to be assessed.

This assessment requires performance records of the components, or the failure probabilities of the components based on the effects model described in Patent Literature 2.

However, as to the performance records of the components, accurate failure probabilities cannot be obtained if the performance period is short.

On the other hand, the effects model needs to consider every search target for each component, and therefore has to consider an enormous number of search targets since the aircraft may be composed of more than several hundreds to thousands of components.

For the reasons above, a more efficient assessment method is necessary.

### [Solution to Problem]

A top-event assessment apparatus according to a first aspect of the present invention for solving the above problem provides a top-event assessment apparatus that determines occurrence probabilities of basic events based on statuses as to the basic events and calculates an occurrence probability of a top event or the like, characterized in that the top-event assessment apparatus includes: a minimal-cut-set management table in which to store minimal cut sets each being a minimal combination of basic events that possibly cause the top event; a coefficient management table in which to store coefficients for each of the basic events, the coefficients corresponding to the statuses as to the basic event; a status management table in which to store the status of each of assessment targets as to each of the basic events; a processor that calculates occurrence probabilities for the respective assessment targets or the occurrence probability of the top event based on information in the minimal-cut-set management table, the coefficient management table, and the status management table; and an assessment result management table in which to store the occurrence probabilities for the respective assessment targets or the occurrence probability of the top event calculated by the processor.

A top-event assessment apparatus according to a second aspect of the present invention for solving the above problem provides the top-event assessment apparatus according to the first aspect, characterized in that: the processor calculates each of the occurrence probabilities for the respective assessment targets by selecting any one of the minimal cut sets stored in the minimal-cut-set management table, determining the statuses for the respective basic events constituting the selected minimal cut set by referring to the status management table, determining the coefficients respectively corresponding to the determined statuses by referring to the coefficient management table, finding the product of the determined coefficients, also finding the product of the coefficients obtained similarly for each of the rest of the minimal cut sets stored in the minimal-cut-set management table, and finding the sum of the products for all the minimal cut sets stored in the minimal-cut-set management table; and the processor calculates the occurrence probability of the top event by summing the occurrence probabilities for all the assessment targets.

A top-event assessment apparatus according to a third aspect of the present invention for solving the above problem provides the top-event assessment apparatus according to the first aspect, characterized in that the statuses stored in the status management table for each of the assessment targets are information regarding a countermeasure for the assessment target against the respective basic events.

A top-event assessment apparatus according to a fourth aspect of the present invention for solving the above problem provides the top-event assessment apparatus according to the third aspect, characterized in that the statuses stored in the status management table are each information indicating that a countermeasure is being taken for the assessment target against a corresponding one of the basic events, information indicating that no countermeasure is being taken for the assessment target against the corresponding basic event, or information indicating that no countermeasure is necessary for the assessment target because the corresponding basic event is impossible to happen.

A top-event assessment apparatus according to a fifth aspect of the present invention for solving the above problem provides the top-event assessment apparatus according to the fourth aspect, characterized in that the coefficients stored in the coefficient management table for each of the basic events correspond to the statuses stored in the status management table such that: for the status which is the information indicating that a countermeasure is being taken against the basic event, the coefficient is a certain value as the occurrence possibility for the basic event determined based on a fact that a countermeasure is being taken; for the status which is the information indicating that no countermeasure is being taken against the basic event, the coefficient is a certain value as the occurrence possibility for the basic event determined based on a fact that no countermeasure is being taken; and for the status which is the information indicating that no countermeasure is necessary because the basic event is impossible to happen, the coefficient is zero as the occurrence possibility for the basic event.

A top-event assessment apparatus according to a sixth aspect of the present invention for solving the above problem provides the top-event assessment apparatus according to the first aspect, characterized in that each of the assessment targets is identified by a combination of a plurality of assessment elements, the status management table includes a plurality of status management tables for the respective assessment elements, each of the status management tables having stored therein the statuses as to the respective basic events, and using the combination of the plurality of assessment elements as the assessment target, the processor refers to the plurality of status management tables for the respective assessment elements, and calculates the occurrence probability for the assessment target which is based on the combination of the plurality of assessment elements and the occurrence probability of the top event.

### [Advantageous Effects of Invention]

The top-event assessment apparatus according to the first aspect of the present invention is a top-event assessment apparatus that determines occurrence probabilities of basic events based on statuses as to the basic events and calculates an occurrence probability of a top event or the like, the top-event assessment apparatus including: a minimal-cut-set management table in which to store minimal cut sets each being a minimal combination of basic events that possibly cause the top event; a coefficient management table in which to store coefficients for each of the basic events, the coefficients corresponding to the statuses as to the basic event; a status management table in which to store the status of each of assessment targets as to each of the basic events; a processor that calculates occurrence probabilities for the respective assessment targets or the occurrence probability of the top event based on information in the minimal-cut-set management table, the coefficient management table, and the status management table; and an assessment result management table in which to store the occurrence probabilities for the respective assessment targets or the occurrence probability of the top event calculated by the processor. Thus, the top-event assessment apparatus allows calculation of the occurrence probabilities for assessment targets or the occurrence probability of the top event.

The top-event assessment apparatus according to the second aspect of the present invention is the top-event assessment apparatus according to the first aspect, in which: the processor calculates each of the occurrence probabilities for the respective assessment targets by selecting any one of the minimal cut sets stored in the minimal-cut-set management table, determining the statuses for the respective basic events constituting the selected minimal cut set by referring to the status management table, determining the coefficients respectively corresponding to the determined statuses by referring to the coefficient management table, finding the product of the determined coefficients, also finding the product of the coefficients obtained similarly for each of the rest of the minimal cut sets stored in the minimal-cut-set management table, and finding the sum of the products for all the minimal cut sets stored in the minimal-cut-set management table; and the processor calculates the occurrence probability of the top event by summing the occurrence probabilities for all the assessment targets. The occurrence probabilities of the basic events can be automatically determined based on the indices of the statuses as to the basic events, and the occurrence probability of the top event can be obtained. Thus, the top-event assessment apparatus allows more efficient assessment than the conventional techniques.

The top-event assessment apparatus according to the third aspect of the present invention is the top-event assessment apparatus according to the first aspect, in which the statuses stored in the status management table for each of the assessment targets are information regarding a countermeasure for the assessment target against the respective basic events. Thus, the top-event assessment apparatus allows the status of an assessment target as to each basic event to be determined based on a countermeasure against the basic event.

The top-event assessment apparatus according to the fourth aspect of the present invention is the top-event assessment apparatus according to the third aspect, in which the statuses stored in the status management table are each information indicating that a countermeasure is being taken for the assessment target against a corresponding one of the basic events, information indicating that no countermeasure is being taken for the assessment target against the corresponding basic event, or information indicating that no countermeasure is necessary for the assessment target because the corresponding basic event is impossible to happen. Thus, the top-event assessment apparatus allows the status of an assessment target as to each basic event to be identified among three statuses: a countermeasure is being taken, no countermeasure is being taken, and no countermeasure is necessary.

The top-event assessment apparatus according to the fifth aspect of the present invention is the top-event assessment apparatus according to the fourth aspect, in which the coefficients stored in the coefficient management table for each of the basic events correspond to the statuses stored in the status management table such that: for the status which is the information indicating that a countermeasure is being taken against the basic event, the coefficient is a certain value as the occurrence possibility for the basic event determined based on a fact that a countermeasure is being taken; for the status which is the information indicating that no countermeasure is being taken against the basic event, the coefficient is a certain value as the occurrence possibility for the basic event determined based on a fact that no countermeasure is being taken; and for the status which is the information indicating that no countermeasure is necessary because the basic event is impossible to happen, the coefficient is zero as the occurrence possibility for the basic event. Thus, the top-event assessment apparatus allows a coefficient for each basic event to be determined among three coefficients based on whether a countermeasure is being taken, no countermeasure is being taken, or no countermeasure is necessary.

The top-event assessment apparatus according to the sixth aspect of the present invention is the top-event assessment apparatus according to the first aspect, in which each of the assessment targets is identified by a combination of a plurality of assessment elements, the status management table includes a plurality of status management tables for the respective assessment elements, each of the status management tables having stored therein the statuses as to the respective basic events, and using the combination of the plurality of assessment elements as the assessment target, the processor refers to the plurality of status management tables for the respective assessment elements,, and calculates the occurrence probability for the assessment target which is based on the combination of the plurality of assessment elements and the occurrence probability of the top event. Thus, the top-event assessment apparatus allows the occurrence probability of the top event to be calculated appropriately based on a combination of multiple assessment elements.

### [Brief Description of Drawings]

[Fig. 1] Fig. 1 is a schematic diagram showing a top-event assessment apparatus according to a first embodiment of the present invention.
[Fig. 2] Fig. 2 is a flowchart of top-event assessment according to the first embodiment of the present invention.
[Fig. 3] Fig. 3 is a schematic diagram showing a top-event assessment apparatus according to a second embodiment of the present invention.
[Fig. 4] Fig. 4 is a tree management table.
[Fig. 5] Fig. 5 is a minimal-cut-set management table.
[Fig. 6] Fig. 6 is a coefficient management table.
[Fig. 7] Fig. 7 is a status management table.
[Fig. 8] Fig. 8 is an assessment result management table.
[Fig. 9] Fig. 9 is a tree management table.
[Fig. 10] Fig. 10 is a minimal-cut-set management table.
[Fig. 11] Fig. 11 is a coefficient management table.
[Fig. 12] Fig. 12 is a first status management table.
[Fig. 13] Fig. 13 is a second status management table.
[Fig. 14] Fig. 14 is an assessment result management table.

### [Description of Embodiments]

The present invention is a top-event assessment apparatus using FTA in which events constituting a basic event is a new basic event, the apparatus being configured to assess safety by automatically determining the occurrence probabilities of respective basic events based on indices of the statuses as to the basic events and calculating the occurrence probability of a top event.

The following describes the system configuration of the top-event assessment apparatus and procedures of top-event assessment performed by the top-event assessment apparatus.

### [Embodiment 1]

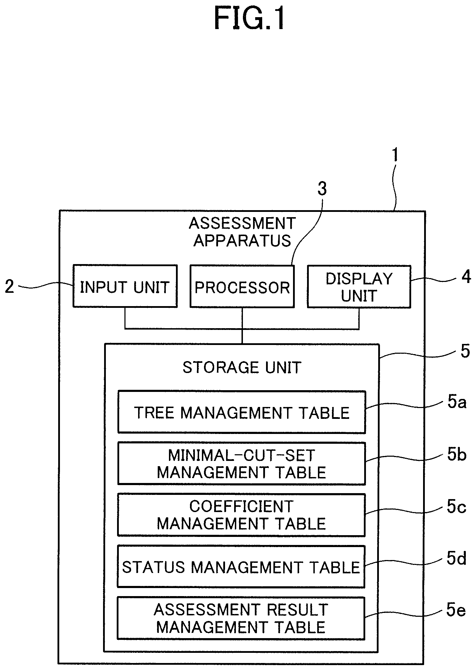

Fig. 1 shows a top-event assessment apparatus according to a first embodiment of the present invention.

As shown in Fig. 1, an assessment apparatus 1 of this embodiment includes an input unit 2, a processor 3, a display unit 4, and a storage unit 5. The storage unit 5 contains a tree management table 5a, a minimal-cut-set management table 5b, a coefficient management table 5c, a status management table 5d, and an assessment result management table 5e.

The input unit 2 is an interface used to enter tree information. Tree information contains four items: identity data (ID) of an event constituting a tree, the name of the event, the type of the event, and the ID of another event to which the event is connected (a connected event).

The type of an event includes, for example, "basic event", which is the lowermost event of FTA, and a logic gate, such as "AND gate" or "OR gate", which is an intermediate event formed by a combination of basic events.

No connected event is entered for the top event because the top event has no further event to be connected to.

Entries for the above four items are stored in the tree management table 5a of the storage unit 5.

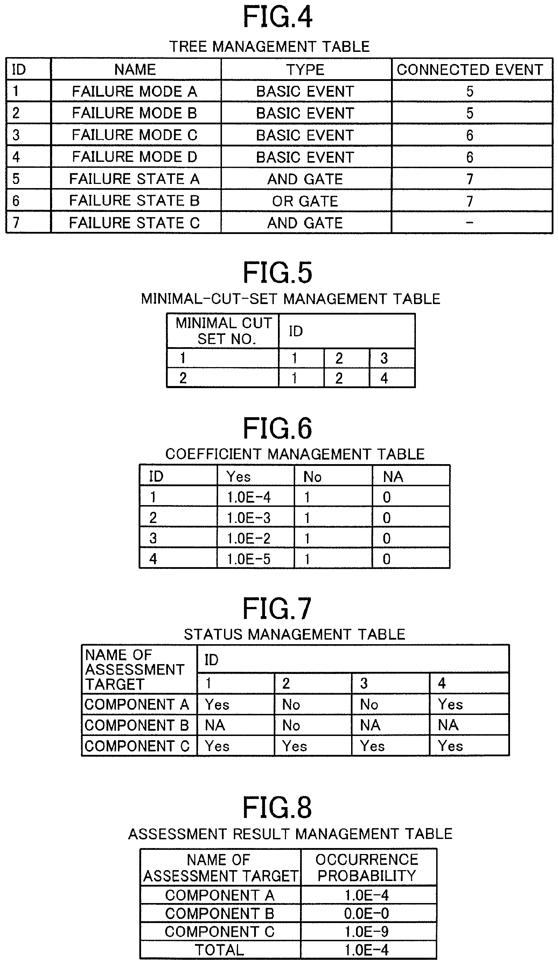

Fig. 4 shows an example of the tree management table 5a.

In the example shown in Fig. 4, numbers 1 to 7 are used as the event IDs.

In this example, the names of the event IDs 1, 2, 3, and 4 are "failure mode A", "failure mode B", "failure mode C", and "failure mode D", respectively, and the names of the event IDs 5, 6, and 7 are "failure state A", "failure state B", and "failure state C", respectively.

The types of the events are "basic event" for the event IDs 1 to 4, "AND gate" for the event ID 5, "OR gate" for the event ID 6, and "AND gate" for the event ID 7.

The connected event is "5" for the event IDs 1 and 2, "6" for the event IDs 3 and 4, and "7" for the IDs 5 and 6. Being the top event, the ID 7 has no connected event.

The processor 3 is an arithmetic unit that identifies minimal cut sets based on the information in the tree management table 5a. Information identified as a minimal cut set is a combination of the IDs of the events that constitute the minimal cut set.

Minimal cut sets can be identified using a conventionally known technique, which is not the target for application of the present invention and is therefore not described in detail herein. All of minimal combinations of the IDs of basic events contributable to the top event are extracted.

The minimal cut sets identified are stored in the minimal-cut-set management table 5b. Fig. 5 shows an example of the minimal-cut-set management table 5b.

As shown in Fig. 5, a minimal cut set 1 stored in the first record of the minimal-cut-set management table 5b is a combination of the basic event IDs 1, 2 and 3, namely, a combination of the basic events: failure modes A, B, and C.

Referring to Fig. 4, the event ID 1 (basic event, failure mode A) and the event ID 2 (basic event, failure mode B) are both connected to the event ID 5 (failure state A).

The event ID 5, which is an AND gate, is true because both of failure mode A and failure mode B are true.

The event ID 3 (basic event, failure mode C) is connected to the event ID 6 (failure state B). The event ID 6, which is an OR gate, is true because failure mode C, which is one of failure mode C and failure mode D, is true.

The event ID 5 (failure state A) and the event ID 6 (failure state B) are both connected to the event ID 7 (failure state C). The event ID 7, which is an AND gate, is true because both of failure state A and failure state B are true.

In this way, the failure state C, which is the top event, could be caused by a combination of the basic events: failure modes A, B, and C.

Similarly, a minimal cut set 2 stored as the second record of the minimal-cut-set management table 5b is a combination of the basic event IDs 1, 2 and 4, namely, a combination of the basic events: failure modes A, B, and D. Thus, the failure state C, which is the top event, could be caused by a combination of the basic-event failure modes A, B, and D.

The input unit 2 is also an interface used to enter coefficient information. Coefficient information is the occurrence probability of a basic event set for each of statuses as to the basic event. Entries for the coefficient information are stored in the coefficient management table 5c.

Fig. 6 shows an example of the coefficient management table 5c.

As shown in Fig. 6, in the coefficient management table 5c, coefficient information is set for each of three statuses, "Yes", "No", and "NA", for each basic event.

The status "Yes" for a basic event indicates that a countermeasure is being taken against the basic event, and the coefficient information for this state is a certain occurrence probability for the basic event determined based on the fact that a countermeasure is being taken. Strictly speaking, even for the same status "Yes", the occurrence probability of a basic event is different for different components, but may be regarded as the same because they are numerical values about the same parts forming different components and their difference is minor compared to the difference in the occurrence probabilities between basic events. The occurrence probability for the state "Yes" is different for each basic event. Specifically, the occurrence probabilities for the event IDs 1, 2, 3, and 4 are 1.0×10⁻⁴, 1.0×10⁻³, 1.0×10⁻², and 1.0×10⁻⁵, respectively. In the drawings, "1.0E-4", for example, represents "1.0×10⁻⁴".

The status "No" for a basic event indicates that no countermeasure is being taken against the basic event, and the coefficient information for this state is an occurrence probability "1" for all the basic events.

The status "NA" for a basic event indicates that no countermeasure is necessary because the basic event is impossible to happen (not applicable), and the coefficient information for this state is an occurrence probability "0" for all the basic events to indicate that the basic event is impossible to happen.

The input unit 2 is also an interface used to enter status information. Status information indicates the statuses of each assessment target in the assessment result management table 5e for the respective basic events. Entries for the status information are stored in the status management table 5d.

Fig. 7 shows an example of the status management table 5d.

As shown in Fig. 7, the status information indicates the status of an assessment target for each basis event, the status being one of the three statuses described above. The status "Yes" for a basic event indicates that a countermeasure is being taken against the basic event. The status "No" of a basic event indicates that no countermeasure is being taken against the basic event. The status "NA" of a basic event indicates that no countermeasure is necessary because the basic event is impossible to happen (not applicable).

Specifically, the statuses for the basic event IDs 1, 2, 3, and 4 are, respectively, "Yes", "No", "No", and "Yes" for an assessment target "Component A", "NA", "No", "NA", and "NA" for an assessment target "Component B", and "Yes", "Yes", "Yes", and "Yes" for an assessment target "Component C". Since the status for each basic event is identified among three statuses regarding countermeasures in this embodiment, appropriate assessment is possible. However, the status information is not limited to the aforementioned three types as long as the status information specifies a status for a basic event among multiple statuses, and also, the status information does not have to be regarding countermeasures.

The processor 3 is also an arithmetic unit that calculates occurrence probabilities for respective assessment targets and calculates the occurrence probability of the top event by summing the occurrence probabilities for all the assessment targets.

The occurrence probability for each assessment target is obtained as follows. For each assessment target shown in Fig. 8, the processor 3 selects any one of the minimal cut sets shown in the minimal-cut-set management table 5b in Fig. 5. Then, the processor 3 determines statuses (status information) for the respective basic events constituting the selected minimal cut set by referring to the status management table 5d in Fig. 7, and then determines coefficients (coefficient information) corresponding to the determined statuses by referring to the coefficient management table 5c in Fig. 6. The processor 3 finds the product of the coefficients thus determined. The processor 3 repeats this for the rest of the minimal cut sets stored in the minimal-cut-set management table 5b in Fig. 5. Then, the processor 3 finds the sum of the products obtained for all the minimal cut sets, and thereby obtains the occurrence probability for the assessment target.

To be more specific, the processor 3 calculates the occurrence probability for the assessment target "Component A" in the first record of the assessment result management table 5e in Fig. 8 as follows. The processor 3 selects the minimal cut set in the first record of the minimal-cut-set management table 5b in Fig. 5. The processor 3 refers to the status management table 5d in Fig. 7 and determines that statuses for the basic events IDs 1, 2, and 3 constituting the selected minimal cut set are "Yes", "No", and "No", respectively. The processor 3 then refers to the coefficient management table 5c in Fig. 6 and determines that coefficients corresponding to the statuses "Yes", "No", and "No" thus determined are 1.0×10⁻⁴, 1, and 1, respectively. Then, the processor 3 finds the product of these coefficients thus determined, as 1.0×10⁻⁴×1×1=1.0×10⁻⁴.

Next, the processor 3 selects the minimal cut set on the second row of the minimal-cut-set management table 5b in Fig. 5. The processor 3 refers to the status management table 5d in Fig. 7 and determines that statuses for the basic events IDs 1, 2, and 4 constituting the selected minimal cut set are "Yes", "No", and "Yes", respectively. The processor 3 then refers to the coefficient management table 5c in Fig. 6 and determines that coefficients corresponding to the statuses "Yes", "No", and "Yes" thus determined for the basic events IDs 1, 2, and 4 are 1.0×10⁻⁴, 1, and 1.0×10⁻⁵, respectively. Then, the processor 3 finds the product of these coefficients thus determined, as 1.0×10⁻⁴×1×1.0×10⁻⁵=1.0×10⁻⁹.

The processor 3 finds the product of coefficients for the rest of the minimal cut sets stored in the minimal-cut-set management table 5b in Fig. 5, as well, and then finds the sum of the products for all the minimal cut sets. In the above example, the sum of the products is found as 1.0×10⁻⁴+1.0×100⁻⁹≈1.0×10⁻⁴.

The occurrence probability for the assessment target "Component A" thus calculated, i.e., 1.0×10⁻⁴, is stored in the first record of the assessment result management table 5e.

Similarly, the occurrence probabilities for the assessment targets "Component B" and "Component C" are calculated as 0.0×10⁰ and 1.0×10⁻⁹, respectively, and stored in the second and third records of the assessment result management table 5e, respectively.

Then, the occurrence probability of the top event is calculated by summing the occurrence probabilities for Components A, B, and C, that is, 1.0×10⁻⁴+0.0×10⁰+1.0×10⁻⁹≈1.0×10⁻⁴. The occurrence probability of the top event thus calculated is stored in the last row of the assessment result management table 5e in Fig. 8.

Fig. 8 shows an example of the assessment result management table 5e.

As shown in Fig. 8, the assessment result management table 5e has stored therein the occurrence probabilities for the respective assessment targets and the occurrence probability of the top event, which are calculated by the processor 3.

Specifically, the assessment result management table 5e has 1.0×10⁻⁴, 0.0×10°, and 1.0×10⁻⁹ stored in its first, second, and third rows as the occurrence probabilities for the assessment targets Components A, B, and C, respectively, and has 1.0×10⁻⁴ stored in the last row as the occurrence probability of the top event, which is the total of the occurrence probabilities for Components A, B, and C.

The display unit 4 displays the tree information, the coefficient information, and the status information, which are inputted using the input unit 2, as well as the minimal cut sets, the occurrence probabilities for the respective assessment targets, and the occurrence probability of the top event, which are obtained by the processor 3. This enables checking of the occurrence probabilities for the respective assessment targets and the occurrence probability of the top event.

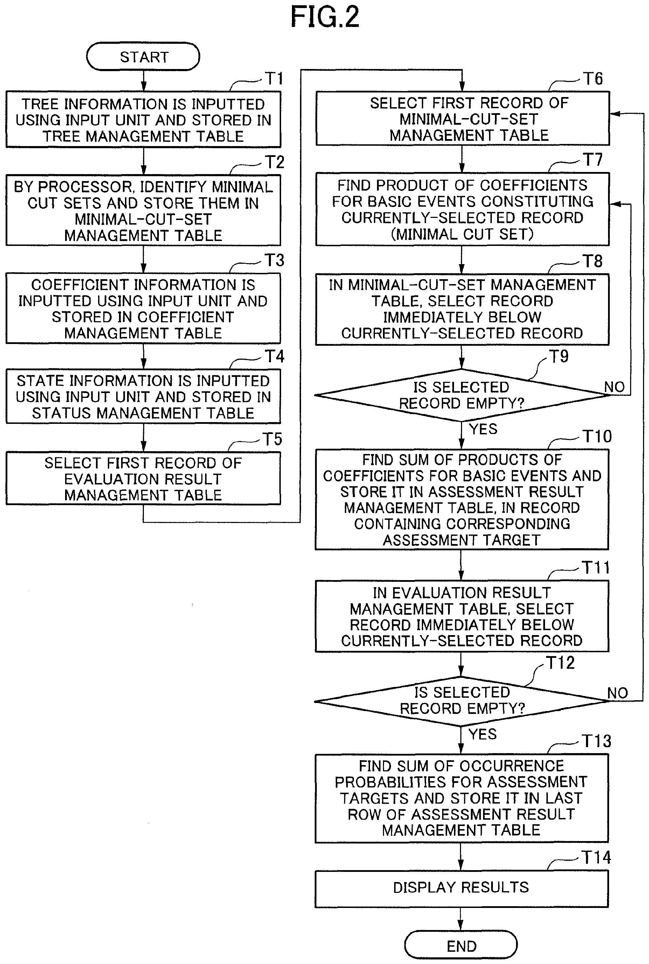

With reference to the flowchart in Fig. 2, a description is given of an example of procedures of top-event assessment performed by the assessment apparatus 1 according to this embodiment having the above-described configuration. In the top-event assessment, the assessment apparatus 1 automatically determines the occurrence probabilities of basic events based on indices of the statuses for the basic events and thus calculates the occurrence probability of the top event.

First, tree information is entered using the input unit 2, and stored in the tree management table 5a (Step T1).

Next, the processor 3 identifies minimal cut sets based on the information in the tree management table 5a, and the minimal cut sets thus identified are stored in the minimal-cut-set management table 5b (Step T2).

Subsequently, coefficient information is entered using the input unit 2, and stored in the coefficient management table 5c (Step T3).

Then, status information is entered using the input unit 2, and stored in the status management table 5d (Step T4).

Thereafter, the processor 3 selects the first record of the assessment result management table 5e (Step T5). In this example, Component A in the first row of the assessment result management table 5e is selected.

Then, the processor 3 selects the first record of the minimal-cut-set management table 5b (Step T6). In this example, the minimal cut set 1 is selected.

The processor 3 then finds the product of coefficients for the basic events constituting the record (minimal cut set) selected in Step T6 (Step T7).

Specifically, the processor 3 refers to the status management table 5d for the assessment target selected in Step T5 and determines statuses for the basic events constituting the minimal cut set based on their event IDs. Then, the processor 3 refers to the coefficient management table 5c and determines coefficients corresponding to the statuses thus determined.

For instance, to find the product of coefficients for the minimal cut set 1 for Component A, the processor 3 acquires coefficients for the respective basic events ID 1, 2, and 3 which constitute the minimal cut set 1 and finds the product of these coefficients. Specifically, the processor 3 determines that the status for the event ID 1 is Yes by referring to the status management table 5d, and determines that the coefficient for the event ID 1 under the status Yes is 1.0×10⁻⁴ by referring to the coefficient management table 5c. The processor 3 determines that the status for the event ID 2 is No by referring to the status management table 5d, and determines that the coefficient for the event ID 2 under the status No is 1 by referring to the coefficient management table 5c. The processor 3 determines that the status for the event ID 3 is No by referring to the status management table 5d, and finds that the coefficient for the event ID 3 under the status No is 1 by referring to the coefficient management table 5c. Then, the processor 3 finds the product of these coefficients as 1.0×10⁻⁴×1×1=1.0×10⁻⁴.

Next, in the minimal-cut-set management table 5b, the processor 3 selects a record immediately below the minimal cut set selected in Step T6 (Step S8). In this example, the minimal cut set 2 which is immediately below the minimal cut set 1 is selected. When the minimal cut set 2 is selected, that is, to find the product of the coefficients for the minimal cut set 2 for Component A, the processor 3 acquires coefficients for the respective basic events ID 1, 2, and 4 which constitute the minimal cut set 2 and calculates the product of these coefficients. Specifically, the processor 3 determines that the status for the event ID 1 is Yes by referring to the status management table 5d, and determines that the coefficient for the event ID 1 under the status Yes is 1.0×10⁻⁴ by referring to the coefficient management table 5c. The processor 3 determines that the status for the event ID 2 is No by referring to the status management table 5d, and determines that the coefficient for the event ID 2 under the status No is 1 by referring to the coefficient management table 5c. The processor 3 determines that the status for the event ID 4 is Yes by referring to the status management table 5d, and determines that the coefficient for the event ID 4 under the status Yes is 1.0×10⁻⁵ by referring to the coefficient management table 5c. Then, the processor 3 finds the product of the coefficients as 1.0×10⁻⁴×1×1.0×10⁻⁵=1.0×10⁻⁹.

Steps from Step T7 are repeated until a record (minimal cut set) selected in Step T8 is empty of basic events (Step S9). In other words, steps from Step T7 are repeated for all the minimal cut sets stored in the minimal-cut-set management table 5b.

When the record (minimal cut set) selected in Step T9 is empty of basic events, that is, when the product of coefficients for the basic elements constituting the minimal cut set has been found for all of the minimal cut sets stored in the minimal-cut-set management table 5b, the processor 3 finds the sum of the products of the coefficients for the basic events, and stores the sum in the assessment result management table 5e, in a row containing the corresponding assessment target (Step T10).

For instance, the product of the coefficients for the basic events constituting the minimal cut set 1 for Component A is 1.0×10⁻⁴, and the product of the coefficients for the basic events constituting the minimal cut set 2 for Component A is 1.0×10⁻⁹. Then, the sum of these products is 1.0×10⁻⁴+1.0×10⁻⁹≈1.0×10⁻⁴, and 1.0×10⁻⁴ is written in the occurrence probability field on the first row (Component A) of the assessment result management table 5e.

Subsequently, the processor 3 selects a record in the assessment record management table 5e immediately below the record selected in Step T5 (Step T11).

In this example, Component B in the second row of the assessment result management table 5e is selected.

Then, unless the record selected in the assessment result management table 5e is empty, steps are repeated from Step T6 (Step T12). In other words, steps from Step T6 are repeated for all the assessment targets stored in the assessment result management table 5e. For instance, for Component B, the product of the coefficients for the basic events constituting the minimal cut set 1 is 0, and the product of the coefficients for the basic events constituting the minimal cut set 2 is also 0. Thus, the sum of the products is 0+0=0, and 0.0×10⁻⁰ is written in the occurrence probability field on the second row (Component B) of the assessment result management table 5e. For Component C, the product of the coefficients for the basic events constituting the minimal cut set 1 is 1.0×10⁻⁹, and the product of the coefficients for the basic events constituting the minimal cut set 2 is 1.0×10⁻¹². Thus, the sum of the products is 1.0×10⁻⁹+1.0×10⁻¹²≈1.0×10⁻⁹, and 1.0×10⁻⁹ is written in the occurrence probability field on the third row (Component C) of the assessment result management table 5e.

The processor 3 then finds the sum (total) of the occurrence probabilities for the respective assessment targets obtained thus far, and stores this sum in the last row of the assessment result management table 5e as the occurrence probability of the top event (Step T13).

In this example, the occurrence probability is 1.0×10⁻⁴ for Component A, 0 for Component B, and 1.0×10⁻⁹ for Component C. Thus, the sum of the occurrence probabilities for the respective assessment targets is 1.0×10⁻⁴+0+1.0×10⁻⁹≈1.0×10⁻⁴, and 1.0×10⁻⁴ is written in the last row (total) of the assessment result management table 5e as the occurrence probability of the top event.

The display unit 4 then displays the results obtained thus far, namely, the occurrence probabilities for the respective assessment targets and the occurrence probability of the top event which is the sum (total) of these occurrence probabilities (Step T14).

As described in detail according to the embodiment, this embodiment can automatically determine the occurrence probabilities of basic events based on indices of the statuses for the basic events and thereby calculate the occurrence probability of the top event. Although one coefficient (a countermeasure against a failure) corresponds to one basic event (failure mode) in this embodiment, the present invention is not limited to this. Multiple coefficients (countermeasures against a failure) may be employed for one basic event. For instance, for screw loosening, the coefficients may include whether an anti-loosening part is used or not, whether torque management is done or not, the management status of work related thereto, and the state of management of an anti-loosening kit. This allows more efficient assessment than those by the conventional techniques.

In sum, this embodiment determines the occurrence probabilities of basic events based on the statuses of each component for the basic events in terms of a countermeasure for the component against the basic events, and thereby calculates the occurrence probability of the top event.

### [Embodiment 2]

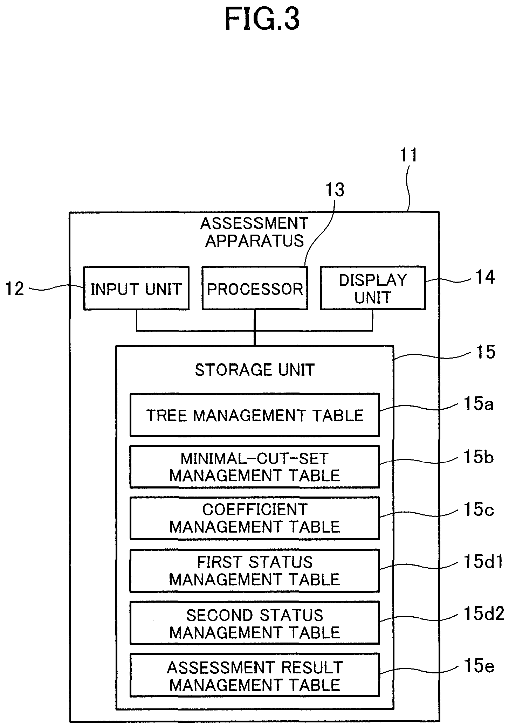

Fig. 3 shows a top-event assessment apparatus according to a second embodiment of the present invention.

The assessment apparatus according to this embodiment identifies an assessment target by using a combination of multiple assessment elements and calculates an occurrence probability for the assessment target which is the combination of assessment elements and the occurrence probability of the top event.

Specifically, as shown in Fig. 3, an assessment apparatus 11 of this embodiment includes an input unit 12, a processor 13, a display unit 14, and a storage unit 15. The storage unit 15 contains a tree management table 15a, a minimal-cut-set management table 15b, a coefficient management table 15c, a first status management table 15d1, a second status management table 15d2, and an assessment result management table 15e.

The input unit 12 is an interface used to enter tree information. Entries for this tree information are stored in the tree management table 15a of the storage unit 15.

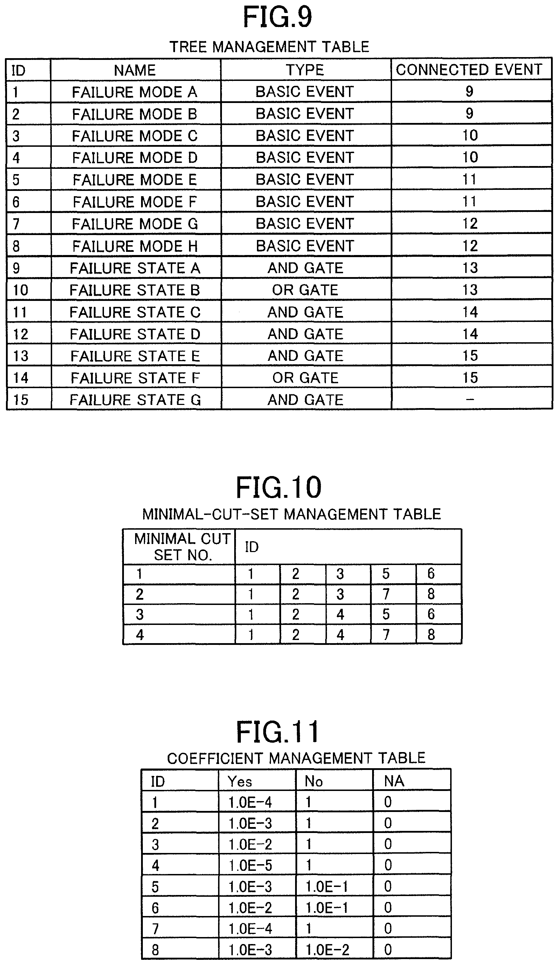

Fig. 9 shows an example of the tree management table 15a.

In the example shown in Fig. 9, numbers 1 to 15 are used as event IDs.

In this example, the names for the event IDs 1, 2, 3, 4, 5, 6, 7, and 8 are failure modes A, B, C, D, E, F, G, and H, respectively, and the names for the event IDs 9, 10, 11, 12, 13, 14, and 15 are failure states A, B, C, D, E, F, and G, respectively.

The types of the event IDs 1 to 8 are each "basic event", and the types of the event IDs 9 to 15 are "AND gate", "OR gate", "AND gate", "AND gate", "AND gate", "OR gate", and "AND gate", respectively.

The connected event is "9" for the event IDs 1 and 2, "10" for the event IDs 3 and 4, "11" for the event IDs 5 and 6, "12" for the event IDs 7 and 8, "13" for the event IDs 9 and 10, "14" for the event IDs 11 and 12, and "15" for the event IDs 13 and 14. Being the top event, the event ID 15 has no connected event.

The processor 13 is an arithmetic unit that identifies minimal cut sets based on the information in the tree management table 15a. The minimal cut sets identified are stored in the minimal-cut-set management table 15b.

Fig. 10 shows an example of the minimal-cut-set management table 15b.

As shown in Fig. 10, a minimal cut set 1 stored in the first record of the minimal-cut-set management table 15b is a combination of the basic event IDs 1, 2, 3, 5, and 6, namely, a combination of the basic events: failure modes A, B, C, E, and F.

Referring to Fig. 9, the event ID 1 (failure mode A, basic event) and the event ID 2 (failure mode B, basic event) are both connected to the event ID 9. The event ID 3 (failure mode C, basic event) is connected to the event ID 10. The event ID 5 (failure mode E, basic event) and the event ID 6 (failure mode F, basic event) are both connected to the event ID 11.

The event ID 9 (failure state A), which is an AND gate, is true because both of failure mode A and failure mode B are true. The event ID 9 (failure state A) is connected to the event ID 13.

The event ID 10 (failure state B), which is an OR gate, is true because failure mode C, which is one of failure mode C and failure mode D, is true. The event ID 10 (failure state B) is connected to the event ID 13.

The event ID 13 (failure state E), which is an AND gate, is true because both of failure state A and failure state B are true. The event ID 13 (failure state E) is connected to the event ID 15.

The event ID 11 (failure state C), which is an AND gate, is true because both of failure mode E and failure mode F are true. The event ID 11 (failure state C) is connected to the event ID 14.

The event ID 14 (failure state F), which is an OR gate, is true because failure state C, which is one of failure state C and failure state D, is true.

The event ID 13 (failure state E) and the event ID 14 (failure state F) are both connected to the event ID 15. The event ID 15 (failure state G), which is an AND gate, is true because both of failure state E and failure state F are true.

In this way, the failure state G, which is the top event, could be caused by a combination of the basic events: failure modes A, B, C, E, and F.

Similarly, a minimal cut set 2 stored in the second record of the minimal-cut-set management table 15b is a combination of the basic event IDs 1, 2, 3, 7, and 8, namely, a combination of the basic events: failure modes A, B, C, G, and H. A minimal cut set 3 stored in the third record of the minimal-cut-set management table 15b is a combination of the basic event IDs 1, 2, 4, 5, and 6, namely, a combination of the basic events: failure modes A, B, D, E, and F. A minimal cut set 4 stored in the fourth record of the minimal-cut-set management table 15b is a combination of the basic event IDs 1, 2, 4, 7, and 8, namely, a combination of the basic events: failure modes A, B, D, G, and H.

The input unit 12 is also an interface used to enter coefficient information. Entries for the coefficient information are stored in the coefficient management table 15c.

Fig. 11 shows an example of the coefficient management table 15c.

As shown in Fig. 11, in the coefficient management table 15c, coefficient information is set for each of three statuses, "Yes", "No", and "NA", for each basic event.

The status of "Yes" for a basic event indicates that a countermeasure is being taken against the basic event, and the coefficient information for this status is a certain occurrence probability for the basic event determined based on the fact that a countermeasure is being taken. The occurrence probability for the state "Yes" is different for each basic event. Specifically, the occurrence probabilities for the event IDs 1, 2, 3, 4, 5, 6, 7, and 8 are 1.0×10⁻⁴, 1.0×10⁻³, 1.0×10⁻², 1.0×10⁻⁵, 1.0×10⁻³, 1.0×10⁻², 1.0×10⁻⁴, and 1.0×10⁻³, respectively.

The status "No" for a basic event indicates that no countermeasure is being taken against the basic event, and the coefficient information for this state is a certain occurrence probability for the basic event determined based on the fact that no countermeasure is being taken. The occurrence probability for the state "No" is different for each basic event. Specifically, the occurrence probabilities for the event IDs 1, 2, 3, 4, 5, 6, 7, and 8 are 1, 1, 1, 1, 1.0×10⁻¹, 1.0×10⁻¹, 1, and 1.0×10⁻², respectively.

The status "NA" for a basic event indicates that no countermeasure is necessary because the basic event is impossible to happen (not applicable), and the coefficient information for this state is an occurrence probability "0" for all the basic events to indicate that the basic event is impossible to happen.

The input unit 2 is also an interface used to enter status information. Status information indicates the statuses of each assessment target as to the respective basic events.

As shown in the assessment result management table 15e, an assessment target is identified by a combination of a first assessment element and a second assessment element. Although an assessment target is identified by a combination of two assessment elements in this embodiment, the present invention is not limited to this. An assessment target may be identified by a combination of more than two assessment elements.

The first assessment element indicates the type of a component, such as, for example, Component A, Component B, and Component C as shown in the first status management table 15d1. Entries for the first assessment element are stored in the first status management table 15d1.

The second assessment element indicates the installation location of a component, such as, for example, Zone A and Zone B as shown in the second status management table 15d2. Entries for the second assessment element are stored in the second status management table 15d2.

The first embodiment uses only the status management table 5d because an assessment target is identified only by its type such as Component A, Component B, and Component C. On the other hand, this embodiment uses the first status management table 15d1 for the first assessment element and the second status management table 15d2 for the second assessment element because an assessment target is identified by a combination of the first assessment element, such as Component A, B, or C, and the second assessment element, such as Zone A or B.

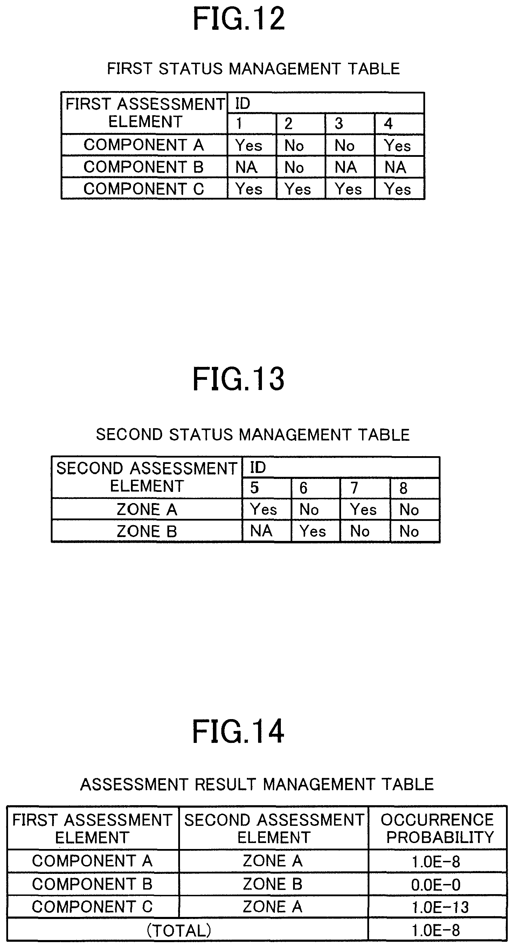

Fig. 12 shows an example of the first status management table 15d1, and Fig. 13 shows an example of the second status management table 15d2.

As shown in Figs. 12 and 13, for each of the first assessment element and the second assessment element, the status "Yes" for a basic event indicates that a countermeasure is being taken against the basic event, the status "No" for a basic event indicates that no countermeasure is being taken against the basic event, and the status "NA" of a basic event indicates that no countermeasure is necessary because the basic event is impossible to happen (not applicable).

Specifically, as shown in Fig. 12, the statuses for the basic events IDs 1, 2, 3, and 4 are, respectively, "Yes", "No", "No", and "Yes" for Component A as the first assessment element, "NA", "No", "NA", and "NA" for Component B as the first assessment element, and "Yes", "Yes", "Yes", and "Yes" for Component C as the first assessment element.

In addition, as shown in Fig. 13, the statuses for the basic events IDs 5, 6, 7, and 8 are, respectively, "Yes", "No", "Yes", and "No" for Zone A as the second assessment element and "NA", "Yes", "No", and "No" for Zone B as the second assessment element.

The processor 13 is also an arithmetic unit that calculates occurrence probabilities for respective assessment targets and calculates the occurrence probability of the top event by summing the occurrence probabilities for all the assessment targets. In this embodiment in which an assessment target is identified by a combination of the first assessment element and the second assessment element, the processor 13 uses the combination of the first assessment element and the second assessment element as the assessment target and refers to the first status management table 15d1 for the first assessment element and the second status management table 15d2 for the second assessment element to calculate the occurrence probabilities for respective assessment targets which are based on the combinations of the first assessment element and the second assessment element, and calculate the occurrence probability of the top event. The calculation results are stored in the assessment result management table 15e.

Fig. 14 shows an example of the assessment result management table 15e.

The occurrence probability for each assessment target is calculated as follows. First, for a certain combination of the first assessment element and the second assessment element stored in the assessment result management table 15e shown in Fig. 14, the processor 13 selects any one of the minimal cut sets in the minimal-cut-set management table 15b shown in Fig. 10. Then, the processor 13 refers to the first status management table 15d1 in Fig. 12 and the second status management table 15d2 in Fig. 13 to determine statuses for the basic events constituting the selected minimal cut set. Further, the processor 13 refers to the coefficient management table 15c in Fig. 11 to determine coefficients corresponding to the statuses thus determined. The processor 13 finds the product of the coefficients thus determined. The processor 13 repeats this for the rest of the minimal cut sets stored in the minimal-cut-set management table 15b in Fig. 10, and finds the sum of the products for all the minimal cut sets. This sum is the occurrence probability for the assessment target.

More specifically, for the combination of Component A and Zone A stored in the first record of the assessment result management table 15e shown in Fig. 14, namely, for Component A installed in Zone A, the processor 13 first selects the first record (minimal cut set 1) of the minimal-cut-set management table 15b shown in Fig. 10. The processor 13 refers to the first status management table 15d1 in Fig. 12 and determines that the statuses for the basis event IDs 1, 2, and 3 constituting the selected minimal cut set are "Yes", "No", and "No", respectively. Similarly, the processor 13 refers to the second status management table 15d2 in Fig. 13 and determines that the statuses for the basis event IDs 5 and 6 constituting the selected minimal cut set are "Yes" and "No", respectively. Then, the processor 13 refers to the coefficient management table 15c in Fig. 11 and determines that coefficients corresponding to the statuses "Yes", "No", "No", "Yes", and "No" determined for the basic event IDs 1, 2, 3, 5, and 6 are 1.0×10⁻⁴, 1, 1, 1.0×10⁻³, and 1.0×10⁻¹, respectively. The processor 13 finds the product of the thus-determined coefficients as 1.0×10⁻⁴×1 ×1×1.0×10⁻³×1.0×10⁻¹=1.0×10⁻⁸.

Similarly, the processor 13 finds the product of coefficients for the minimal cut sets number 2 to 4 stored in the minimal-cut-set management table 15b in Fig. 10. The following shows the results.
Minimal cut set 1: 1.0×10⁻⁴×1×1×1.0×10⁻³×1.0×10⁻¹=1.0×10⁻⁸
Minimal cut set 2: 1.0×10⁻⁴×1×1×1.0×10⁻⁴×1.0×10⁻²=1.0×10⁻¹⁰
Minimal cut set 3: 1.0×10⁴×1×1.0×10⁻⁵×1.0×10⁻³×1.0×10⁻¹=1.0×10⁻¹³
Minimal cut set 4: 1.0×10⁻⁴×1×1.0×10⁻⁵×1.0×10⁻⁴×1.0×10⁻¹=1.0×10⁻¹³

Then, the processor 13 finds the sum of the products for all the minimal cut sets stored in the minimal-cut-set management table 15b in Fig. 10. In the above example, the sum of the products is 1.0×10⁻⁸+1.0×10⁻¹⁰+1.0×10⁻¹³+1.0×10⁻¹³≈1.0×10⁻⁸.

The thus-calculated occurrence probability for the combination of Component A and Zone A, namely 1.0×10⁻¹⁸, is stored in the first record of the assessment result management table 15e.

Similarly, the processor 13 calculates an occurrence probability for the combination of Component B and Zone B and an occurrence probability for the combination of Component C and Zone A stored in the second and third records of the assessment result management table 15e as 0.0×10⁰ and 1.0×10⁻¹³, respectively, and stores these values in the second and third records of the assessment result management table 15e, respectively.

In the above example of this embodiment, Component A is installed only in Zone A and not in Zone B, Component B is installed only in Zone B and not in Zone A, and Component C is installed only in Zone A and not in Zone B. It is unnecessary to calculate an occurrence probability for a combination that does not exist.

The processor 13 then calculates the occurrence probability of the top event by summing the occurrence probabilities for the combination of Component A and Zone A, the combination of Component B and Zone B, and the combination of Component C and Zone A, as 1.0×10⁻⁸+0.0×10⁰+1.0×10⁻¹³≈1.0×10⁻⁸. The occurrence probability of the top event thus calculated is stored in the last row of the assessment result management table 15e in Fig. 14.

As shown in Fig. 14, the assessment result management table 15e has 1.0×10⁻⁸, 0.0×10⁰, and 1.0×10⁻¹³ stored in its first, second, and third rows as the occurrence probabilities for the combination of Component A and Zone A, the combination of Component B and Zone B, and the combination of Component C and Zone A, respectively, and has 1.0×10⁻⁸ stored on the last row as the occurrence probability of the top event, which is the total of the occurrence probabilities for the combination of Component A and Zone A, the combination of Component B and Zone B, and the combination of Component C and Zone A.

The display unit 14 displays the tree information, the coefficient information, and the status information, which are inputted using the input unit 12, as well as the minimal cut sets, the occurrence probabilities for the respective assessment targets which are based on the combinations of the first assessment element and the second assessment element, and the occurrence probability of the top event, which are obtained by the processor 13. This enables checking of the occurrence probabilities for the respective assessment targets and the occurrence probability of the top event.

This embodiment described in detail above achieves not only advantageous effects similar to those achieved by the first embodiment, but also the following advantageous effects because an assessment target is identified by a combination of multiple assessment elements.

In FTA regarding fire outbreak in a civil aircraft for example, an assessment target can be divided into two assessment elements: "a component to be assessed" and "the location of installation of the component to be assessed".

The reliability for each of the above assessment elements is based on assessment results obtained by each manufacture (such as the manufacturers of the aircraft and the manufacturer of the component). Further, different manufacturers are responsible for different parts of the aircraft.

Thus, it is appropriate that the occurrence probability for an assessment target is calculated using a combination of reliability assessment results reached by the respective manufacturers (the reliability assessment results corresponding to Yes, No, and NA in the coefficient management table).

For example, when two different components are installed in the same location, it is appropriate that different assessment results are obtained for the same location by combining the reliability assessment result reached by the manufacturer of the structure of the part of the aircraft where the different components are installed, with each of the reliability assessment results reached by the respective manufacturers of the different components.

Similarly, when the same components are installed in two different locations, it is appropriate that different assessment results are obtained for the same components by combining each of the reliability assessment results reached by the manufacturers of the structures of the parts of the aircraft where the respective same components are installed, with the reliability assessment result reached by the manufacturer of the same components.

Hence, the second embodiment makes it possible to expand the reliability assessment to manufactures responsible for the respective assessment elements and calculate the occurrence probability of fire in the aircraft based on results of the assessment thus expanded.

### [Industrial Applicability]

The present invention is widely useful in industry as a top-event assessment apparatus having a basic-event status identification function. The present invention is particularly advantageous for use in safety analysis for type certification of a small passenger aircraft.

### [Reference Signs List]

- 1, 11: ASSESSMENT APPARATUS
- 2, 12: INPUT UNIT
- 3, 13: PROCESSOR
- 4, 14: DISPLAY UNIT
- 5, 15: STORAGE UNIT
- 5a, 15a: TREE MANAGEMENT TABLE
- 5b, 15b: MINIMAL-CUT-SET MANAGEMENT TABLE
- 5c, 15c: COEFFICIENT MANAGEMENT TABLE
- 5d: STATUS MANAGEMENT TABLE
- 5e, 15e: ASSESSMENT RESULT MANAGEMENT TABLE
- 15d1: FIRST STATUS MANAGEMENT TABLE
- 15d2: SECOND STATUS MANAGEMENT TABLE

## Claims

1. A top-event assessment apparatus (1; 11) that determines occurrence probabilities of basic events based on statuses as to the basic events and calculates an occurrence probability of a top event or the like, **characterized in that**
the top-event assessment apparatus (1; 11) comprises:
a minimal-cut-set management table (5b; 15b) in which to store minimal cut sets each being a minimal combination of basic events that possibly cause the top event;
a coefficient management table (5c; 15c) in which to store coefficients for each of the basic events, the coefficients corresponding to the statuses as to the basic event;
a status management table (5d; 15d1, 15d2) in which to store the status of each of assessment targets as to each of the basic events;
a processor (3; 13) that calculates occurrence probabilities for the respective assessment targets or the occurrence probability of the top event based on information in the minimal-cut-set management table (5b; 15b), the coefficient management table (5c; 15c), and the status management table (5d; 15d1, 15d2); and
an assessment result management table (5e; 15e) in which to store the occurrence probabilities for the respective assessment targets or the occurrence probability of the top event calculated by the processor (3; 13).

2. The top-event assessment apparatus (1; 11) according to claim 1, **characterized in that**
the processor (3; 13) calculates each of the occurrence probabilities for the respective assessment targets by selecting any one of the minimal cut sets stored in the minimal-cut-set management table (5b; 15b), determining the statuses for the respective basic events constituting the selected minimal cut set by referring to the status management table (5d; 15d1, 15d2), determining the coefficients respectively corresponding to the determined statuses by referring to the coefficient management table (5c; 15c), finding the product of the determined coefficients, also finding the product of the coefficients obtained similarly for each of the rest of the minimal cut sets stored in the minimal-cut-set management table (5b; 15b), and finding the sum of the products for all the minimal cut sets stored in the minimal-cut-set management table (5b; 15b), and
the processor (3; 13) calculates the occurrence probability of the top event by summing the occurrence probabilities for all the assessment targets.

3. The top-event assessment apparatus (1; 11) according to claim 1, **characterized in that**
the statuses stored in the status management table (5d; 15d1, 15d2) for each of the assessment targets are information regarding a countermeasure for the assessment target against the respective basic events.

4. The top-event assessment apparatus (1; 11) according to claim 3, **characterized in that**
the statuses stored in the status management table (5d; 15d1, 15d2) are each information indicating that a countermeasure is being taken for the assessment target against a corresponding one of the basic events, information indicating that no countermeasure is being taken for the assessment target against the corresponding basic event, or information indicating that no countermeasure is necessary for the assessment target because the corresponding basic event is impossible to happen.

5. The top-event assessment apparatus (1; 11) according to claim 4, **characterized in that**
the coefficients stored in the coefficient management table (5c; 15c) for each of the basic events correspond to the statuses stored in the status management table (5d; 15d1, 15d2) such that
for the status which is the information indicating that a countermeasure is being taken against the basic event, the coefficient is a certain value as the occurrence possibility for the basic event determined based on a fact that a countermeasure is being taken,
for the status which is the information indicating that no countermeasure is being taken against the basic event, the coefficient is a certain value as the occurrence possibility for the basic event determined based on a fact that no countermeasure is being taken, and
for the status which is the information indicating that no countermeasure is necessary because the basic event is impossible to happen, the coefficient is zero as the occurrence possibility for the basic event.

6. The top-event assessment apparatus (11) according to claim 1, **characterized in that**
each of the assessment targets is identified by a combination of a plurality of assessment elements,
the status management table (15d1, 15d2) includes a plurality of status management tables (15d1, 15d2) for the respective assessment elements, each of the status management tables (15d1, 15d2) having stored therein the statuses as to the respective basic events, and
using the combination of the plurality of assessment elements as the assessment target, the processor (13) refers to the plurality of status management tables (15d1, 15d2) for the respective assessment elements, and calculates the occurrence probability for the assessment target which is based on the combination of the plurality of assessment elements and the occurrence probability of the top event.
